# EUROPÄISCHE PATENTSCHRIFT

(11) **EP 2 851 593 B1**
(45) Veröffentlichungstag und Bekanntmachung des Hinweises auf die Patenterteilung: **01.03.2017**
(21) Anmeldenummer: 14179472.7
(22) Anmeldetag: 01.08.2014
(51) Int. Cl.: F16K 17/38, F16K 31/00, F16K 31/04

(54) **Ventil**
Valve
Soupape

(30) Priorität: 20.09.2013 EP 13185316
(43) Veröffentlichungstag der Anmeldung: 25.03.2015
(73) Patentinhaber: Hanon Systems, Daejeon 306-230 (KR)
(72) Erfinder: Engels, Friedhelm, 63628 Bad Soden-Salmünster (DE)
(74) Vertreter: Hoffmann Eitle

(56) Entgegenhaltungen:
- EP-A1- 2 354 607
- EP-A2- 1 860 298
- WO-A1-03/042517
- WO-A1-2013/126374
- DE-A1- 19 608 748
- DE-A1-102006 038 213
- DE-A1-102010 026 368
- DE-A1-102011 081 183
- FR-A1- 2 839 164
- US-A- 5 427 132

## Beschreibung

### Technisches Gebiet

Die Erfindung betrifft ein Ventil.

### Stand der Technik

Insbesondere in dem Kühlwasserkreislauf von Verbrennungsmotoren kommen Ventile zum Einsatz, die in dem Fall, dass die Temperatur des Kühlwassers eine bestimmte Schwelle überschreitet, im Rahmen einer sogenannten "fail-safe"-Funktion das Ventil öffnen, um sicherzustellen, dass das Kühlwasser durch einen Kühler strömt.

Ein derartiges Ventil ist beispielsweise aus der WO 2013/126374 A1 bekannt. Dieses Ventil weist ein elektrisch betätigtes, sich drehendes Ventilelement auf, das im Normalbetrieb elektrisch bewegt wird. Im Rahmen der "fail-safe"-Funktion wird ein Gleitelement innerhalb des sich drehenden Ventilelements verschoben, um einen Ausgang zu dem Kühler zu öffnen.

Die FR 2 839 164 A1 betrifft ein Ventil mit einem sich temperaturabhängig ausdehnenden Temperaturelement, bei dem in einem geschlossenen Zylinder ein Kolben mit einer daran angebrachten Kolbenstange beweglich ist. Die Kolbenstange ist fest verankert, so dass sich der umgebende Zylinder bezüglich der verankerten Kolbenstange und des daran angebrachten Kolbens bewegt.

Aus der US 5,427,132 A geht ein Ventil mit einem Wachselement mit einem Abschnitt hervor, der bei Ausdehnung ausfährt und ein drehbetätigtes Ventilelement öffnet. Der Hub des ausfahrbaren Abschnitts ist kalibrierbar.

Die EP 1 860 298 A2 betrifft einen Kühlkreislauf für einen Verbrennungsmotor mit einem Ventil, das gegen eine Feder öffnet.

### Darstellung der Erfindung

Der Erfindung liegt die Aufgabe zugrunde, die Einsatzvielfalt eines derartigen Ventils zu vergrößern.

Die Lösung dieser Aufgabe erfolgt durch das im Patentanspruch 1 beschriebene Ventil. Dieses weist demzufolge zumindest ein sich temperaturabhängig ausdehnendes Temperaturelement auf, das Wachs enthält. Das temperaturabhängige Verhalten dieses Materials kann besonders gut eingestellt werden. Beispielsweise kann das Temperaturelement sehr genau und insbesondere vergleichsweise "schmal" ausgelegt werden, so dass die Ausdehnung, und damit die Aktivierung der "fail-safe"-Funktion bei beispielsweise 105°C beginnt, und die Ruheposition bei Abkühlung auf beispielsweise 100°C erreicht wird. Der genannte Temperaturbereich kann bedarfsgemäß verschoben und in jedem Fall vergleichsweise genau eingehalten werden.

Darüber hinaus sorgt das Temperaturelement in vorteilhafter Weise für eine ausreichende Kraft, um bei Ausdehnung einen ausfahrbaren Abschnitt des Temperaturelements auszufahren. Dieser ist derart angeordnet und ausgelegt, dass er ein drehbetätigtes Ventilelement öffnet. Mit anderen Worten wird im Rahmen der "fail-safe"-Funktion nicht ein separates Ventilelement geöffnet, sondern das drehbetätigte Ventilelement selbst. Es ist folglich nur ein einziges Ventilelement vorhanden, und der Aufbau ist deshalb besonders einfach. Darüber hinaus hat sich bei ersten Versuchen gezeigt, dass die Zuverlässigkeit durch die erfindungsgemäße Maßnahme verbessert werden kann. Ein drehbetätigtes Ventilelement bietet ferner den Vorteil, dass die Regulierung des Volumenstroms sehr fein erfolgen kann und insbesondere auch durch die Geometrie des Öffnungsquerschnitts, die sich in Abhängigkeit von verschiedenen Drehstellungen ändern kann, möglich ist. Das Temperatur- oder Wachselement kann auch als "power pill" bezeichnet werden.

Erfindungsgemäß ist das Temperaturelement insgesamt, auch bei ausgefahrenem Abschnitt, derart verschiebbar, dass das Ventil geschlossen bleibt, oder beispielsweise infolge einer Rückstellfeder, geschlossen wird. Anders als beispielsweise beim Gegenstand der oben erwähnten FR 2 839 164 A1 ist somit das Temperaturelement einschließlich des ausfahrbaren Abschnitts derart beweglich, dass es, gewissermaßen auch bei hohen Temperaturen, bei denen es das Ventil normalerweise öffnen würde, eine Schließung des Ventils zulässt. Beispielsweise kann seitens der Motorsteuerung vorgegeben werden, dass auch bei einer Temperatur, die zu dem "fail-safe"-Betrieb führt und den Zufluss zu einem Kühler öffnet, das Ventil geschlossen bleibt. Dies wird durch eine Verschiebung des Temperaturelements insgesamt, beispielsweise gegen eine Feder, erreicht. Mit anderen Worten ist somit das Temperaturelement insgesamt beweglich oder "fliegend" gelagert, jedoch, beispielsweise durch eine Feder, derart vorgespannt, dass es im Normalbetrieb, wenn also die Funktion des Temperaturelements nicht außer Kraft gesetzt werden soll, durch Ausfahren des Abschnitts eine Öffnung des Ventils herbeiführt. Die vorangehend beschriebene Funktion kann auch als "Zwangsschließung" des Ventils bezeichnet werden. Diese Zwangsschließung wird dadurch erreicht, dass ein Ventilantriebsmotor das Ventil schließt, und dabei beispielsweise ein Hebel, der mit dem ausfahrbaren Abschnitt des Temperaturelements zusammenwirkt, derart "mitgedreht" wird, dass das Temperaturelement, trotz ausgefahrenem Abschnitt, derart verschoben wird, dass das Ventil geschlossen wird.

Ergänzend sei erwähnt, dass das erfindungsgemäße Ventil rein elektrisch funktioniert und keine pneumatischen Antriebe benötigt.

Bevorzugte Weiterbildungen des erfindungsgemäßen Ventils finden sich in den weiteren Ansprüchen.

Wie vorangehend bereits erwähnt, ist das Temperaturelement gegen eine Feder als Federelement verschiebbar. Die durch das Federelement auf das Temperaturelement aufgebrachte Kraft ist größer, als die zum Öffnen des Ventilelements erforderliche Kraft, so dass trotz der Verschiebbarkeit des Temperaturelements insgesamt die Funktion des Temperaturelements im Hinblick auf ein Öffnen des Ventils, insbesondere im Rahmen einer "fail-safe"-Funktion, gewährleistet ist. Die Kraft der Feder kann jedoch, beispielsweise wenn die Motorsteuerung dies veranlasst, beim Verschieben des Temperaturelements insgesamt, auch bei ausgefahrenem Abschnitt, überwunden werden, so dass trotz hoher Temperaturen und ausgefahrenem Abschnitt das Ventil geschlossen bleibt oder geschlossen wird.

Die Betätigung im Rahmen der "fail-safe"-Funktion kann dadurch verbessert werden, dass zwischen dem ausfahrbaren Abschnitt und dem Ventilelement eine Übersetzung, insbesondere ein Getriebe angeordnet ist. Beispielsweise kann die von dem ausfahrbaren Abschnitt zur Verfügung gestellte Kraft, trotz eines vergleichsweise kurzen Verschiebeweges dazu genutzt werden, das Ventilelement vollständig zu öffnen. Dies entspricht einer bevorzugten Ausführungsform. Für die Übersetzung hat es sich darüber hinaus als vorteilhaft erwiesen, wenn diese zumindest ein Zahnrad und/oder zumindest einen gezahnten Abschnitt aufweist.

Für ein besonders gutes Ansprechverhalten wird bevorzugt, dass das Temperaturelement von dem zu steuernden Medium, bevorzugt Wasser, umströmt wird.

Darüber hinaus wird derzeit bevorzugt, dass zumindest ein elastisches Element, wie z.B. eine Feder vorhanden ist, das/die das Temperaturelement in seine nicht ausgefahrene Stellung drückt. Hierdurch wird auch bei einem vergleichsweise heißen Ventil gewährleistet, dass der ausfahrbare Abschnitt des Temperaturelements in seine Ruhestellung zurückkehrt.

Bevorzugt weist das erfindungsgemäße Ventil ferner am Ausgang ein Druckbegrenzungsventil auf. Hierdurch können wechselnde Eingangsdrücke ausgeglichen oder "weggeregelt" werden. Mit anderen Worten wird der Volumenstrom hierdurch stabilisiert. Ferner wird durch das Druckbegrenzungsventil der Durchfluss durch den Bypass geregelt, so dass die Temperatur exakt geregelt werden kann. Mit anderen Worten arbeitet das Ventil wie ein Mischventil. Hierbei weist das Druckbegrenzungsventil als Öffnungspunkt diejenige oder eine leicht erhöhte Druckdifferenz auf, die der nachgeschaltete Wärmetauscher aufweist. D.h., dass sich beim Schließen des Ventils die Druckdifferenz im Vorlauf, dem sogenannten SILK-Modul erhöht, so dass sich das Druckbegrenzungsventil langsam öffnet und den Bypass freigibt. Dies unterstreicht den Vorteil gegenüber herkömmlichen Thermostatreglern, die stets eine Zwangsleckage aufweisen müssen, damit das Temperaturelement auf das umströmende Medium reagiert.

### Kurze Beschreibung der Zeichnungen

Nachfolgend wird die Erfindung anhand einer beispielhaft dargestellten Ausführungsform näher erläutert.

Es zeigen:
- Fig. 1: das erfindungsgemäße Ventil in einer geschlossenen Stellung in einer Seitenansicht;
- Fig. 2: das erfindungsgemäße Ventil in der Stellung von Fig. 1 in einer Draufsicht;
- Fig. 3: das erfindungsgemäße Ventil in einer geöffneten Stellung mit ausgelöster "fail-safe"-Funktion in einer Draufsicht; und
- Fig. 4: eine Schnittdarstellung zur Verdeutlichung der "Zwangsschließung" trotz ausgefahrenem Abschnitt des Temperaturelements.

### Ausführliche Beschreibung einer bevorzugten Ausführungsform der Erfindung

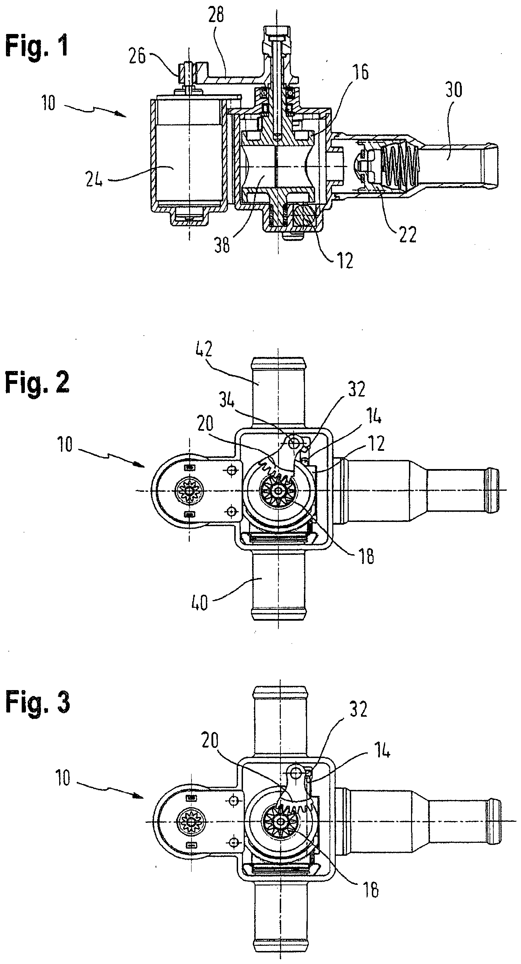

Wie in Fig. 1 zu erkennen ist, weist das erfindungsgemäße Ventil 10 in der dargestellten Ausführungsform einen Antrieb in Form eines Elektromotors 24 auf, an dessen Ausgangswelle ein Ritzel 26 angebracht ist, das mit einem etwa viertelkreisförmigen Zahnradabschnitt 28 in Eingriff ist. Dieser ist in geeigneter Weise mit dem Ventilelement 16 verbunden, das demnach drehbetätigt wird. Gemäß der Ausrichtung von Fig. 1 dreht es sich um eine vertikal verlaufende Achse.

In Fig. 1 ist das Ventilelement in seiner geschlossenen Stellung gezeigt. Hierunter wird eine Stellung verstanden, in der Kühlwasser, das beispielsweise, wie genauer in den Fig. 2 und 3 zu erkennen ist, aus der Richtung des Betrachters in das Ventil strömt, nicht, wie in einer geöffneten Stellung, von dem Betrachter weg zu einem Kühler geleitet wird, sondern mit erhöhtem Staudruck an einem Druckbegrenzungsventil 22 ansteht. Dieses schaltet auf eine sogenannte kleine Zirkulation, ohne dass eine Kühlwirkung durch das SILK-Modul eintritt. Hierzu ist in vorteilhafter Weise der Öffnungspunkt des Druckbegrenzungsventils gleich oder ein wenig größer als die Druckdifferenz des SILK-Moduls oder eines anderen Wärmetauschers, da es sonst stets zu Leckage über das Druckbegrenzungsventil kommt. In der gezeigten Ausführungsform weist somit der Bypass 30, der als Ausgang dient, ein Druckbegrenzungsventil 22 auf. Im Normalbetrieb ist das Ventil elektrisch gesteuert und betätigt, so dass nicht nur die in Fig. 1 gezeigte, geschlossene Stellung und die in Fig. 3 gezeigte, offene Stellung möglich ist, sondern jegliche Zwischenstellungen, um fein einzustellen, welcher Anteil des Kühlwasser durch den Kühler und welcher durch den Bypass an dem Kühler vorbeiströmen soll. Die elektrische Betätigung ist insbesondere während des sogenannten Normalbetriebs vorgesehen, wenn sich die Temperatur des Mediums unterhalb einer bestimmten Grenztemperatur befindet. Ferner kann vorteilhaft eine Positionsüberwachung mittels eines Sensors vorgesehen sein.

In Fig. 2 ist der Verdeutlichung halber der Zahnradabschnitt 28 weggelassen, so dass die erfindungsgemäße "fail-safe"-Funktion besser erkennbar ist. Diese besteht aus einem im (gemäß Fig. 1) unteren Bereich des Ventils angeordneten Temperaturelement 12, das in vorteilhafter Weise von dem zu regulierenden Medium, bei dem es sich bevorzugt um Wasser handelt, umströmt wird. In dem Temperaturelement befindet sich beispielsweise Wachs, das sich temperaturabhängig derart ausdehnt, dass hierdurch ein ausfahrbarer Abschnitt 14 ausgefahren werden kann. In der in Fig. 2 gezeigten geschlossenen Stellung ist der ausfahrbare Abschnitt noch eingefahren. Es ist jedoch bereits in Fig. 2 ein Hebel 32 zu erkennen, gegen den der ausfahrbare Abschnitt 14 im ausgefahrenen Zustand drücken kann. Der Hebel 32 ist an einer Achse 34 angebracht oder ausgebildet, an der ferner ein gezahnter Abschnitt 20 angebracht ist. Wenn demnach der ausfahrbare Abschnitt 14 ausfährt und durch Druck gegen den Hebel 32 den gezahnten Abschnitt 20 um die Achse 34 gegen den Uhrzeigersinn rotieren lässt, dreht der gezahnte Abschnitt durch seinen Eingriff mit einem an der Achse des Ventilelements angebrachten Ritzel 18 das Ventilelement 16 in Richtung des Uhrzeigersinns, so dass der in Fig. 1 erkennbare Durchgang 38 des Ventilelements 16 mit dem Eingang 40 derart ausgerichtet ist, dass das Medium durch das Ventilelement 16 zu dem damit fluchtenden Ausgang 42 strömt und dem Kühler zugeführt wird.

In Fig. 3 ist diese Stellung gezeigt. Es ist erkennbar, dass der ausfahrbare Abschnitt 14 ausgefahren ist und den gezahnten Abschnitt 20 durch Druck gegen den Hebel 32 gegen den Uhrzeigersinn verdreht hat. Wegen der vorgesehenen Übersetzung, da der gezahnte Abschnitt 20 einen größeren "Hebelarm", mit anderen Worten einen größeren Abstand der Zähne von seinem Drehpunkt aufweist als das Ritzel 18, kann sich das Ritzel um etwa 90° derart drehen, dass das Ventil in vorteilhafter Weise vollständig geöffnet wird, dass mit anderen Worten der Durchgang 38 (vgl. Fig. 1) nahezu vollständig mit dem Ein- 41 und Ausgang 42 fluchtet.

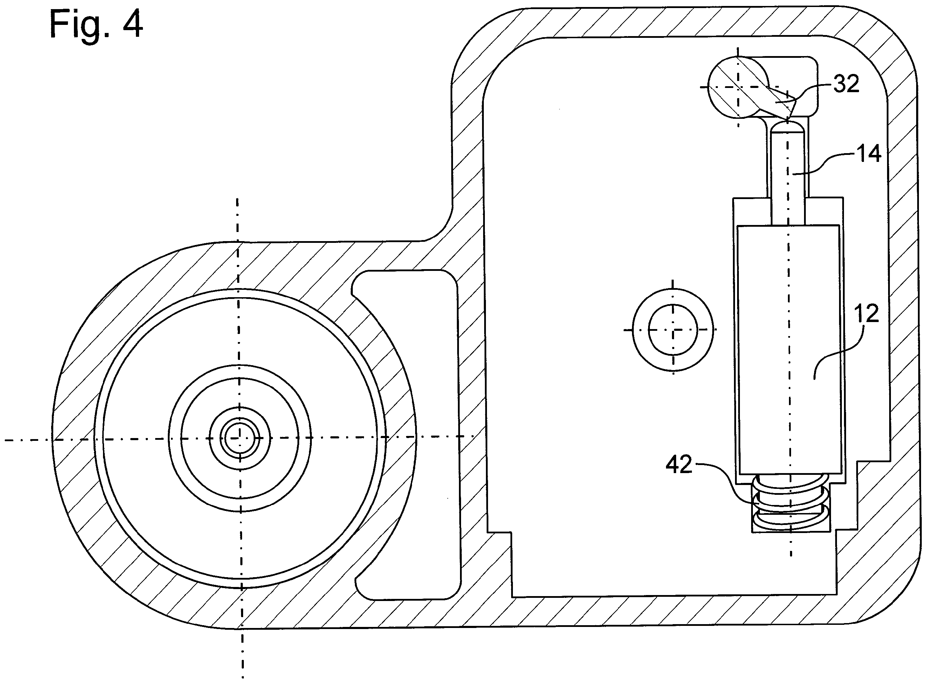

In Fig. 4 ist gezeigt, wie trotz des Abschnitts 14 im ausgefahrenen Zustand eine Zwangsschließung des Ventils herbeigeführt werden kann. Hierzu ist das Temperaturelement 12 insgesamt verschiebbar, in dem gezeigten Fall gegen eine Feder 42, gelagert. Wenn beispielsweise die Motorsteuerung dies vorgibt, wird das Ventil durch seinen Antrieb geschlossen, so dass der Hebel 32 in Richtung des Uhrzeigersinns verdreht wird, und das Temperaturelement 12 einschließlich des ausgefahrenen Abschnitts 14 entsprechend verschoben wird, so dass das Ventil geschlossen bleibt, was in Fig. 4 anhand des nach unten geneigten Hebels 32 zu erkennen ist. Wenn das Ventil, beispielsweise aufgrund hoher Temperaturen, vorangehend geöffnet war, kann es beispielsweise durch eine Rückstellfeder nach dem Verschieben des Temperaturelements 12 in die in Fig. 4 gezeigte Position geschlossen werden. Mit anderen Worten kann das Ventil zwangsweise geschlossen, und die "fail-safe"-Funktion außer Kraft gesetzt werden. Die "fail-safe"-Funktion entfaltet jedoch ihre vorteilhafte Wirkung beispielsweise dann, wenn die Motorelektronik ausfällt oder ein elektrischer Verbindungsstecker zu dem Ventilantrieb abgezogen ist, so dass das Ventil nicht mehr von der Motorsteuerung geöffnet werden kann. Wenn in einem solchen Zustand eine übermäßige Erhöhung der Temperatur droht, fährt der ausfahrbare Abschnitt 14 aus und öffnet mittels des Hebels 32 das Ventil.

## Patentansprüche

1. Ventil (10) mit zumindest einem sich temperaturabhängig ausdehnenden Temperaturelement (12) mit Wachs, das einen Abschnitt (14) aufweist, der bei Ausdehnung ausfährt und ein drehbetätigtes Ventilelement (16) des Ventils (10) öffnet, wobei das
Temperaturelement (12), auch bei ausgefahrenem Abschnitt (14), derart verschiebbar ist, dass das Ventil (16) geschlossen bleibt oder geschlossen wird, wobei das Temperaturelement gegen eine Feder (42) des Ventils (10) verschiebbar ist, **dadurch gekennzeichnet dass** diese
Zwangsschließung dadurch erreicht wird, dass ein Ventilantriebsmotor des Ventils (10) das Ventil schließt und dabei
beispielsweise ein Hebel, der mit dem ausfahrbaren Abschnitt des Temperaturelements zusammenwirkt, derart mitgedreht wird, dass das Temperaturelement verschoben wird.

2. Ventil nach Anspruch 1,
**dadurch gekennzeichnet, dass**
sich zwischen dem ausfahrbaren Abschnitt (14) und dem Ventilelement (16) eine Übersetzung befindet.

3. Ventil nach Anspruch 2,
**dadurch gekennzeichnet, dass**
die Übersetzung zumindest ein Ritzel (18) und/oder einen gezahnten Abschnitt (20) aufweist.

4. Ventil nach einem der vorangehenden Ansprüche,
**dadurch gekennzeichnet, dass**
der ausfahrbare Abschnitt (14) und/oder die Übersetzung dafür ausgelegt ist, das Ventilelement (16) vollständig zu öffnen.

5. Ventil nach einem der vorangehenden Ansprüche,
**dadurch gekennzeichnet, dass**
das Temperaturelement (12) von dem zu steuernden Medium umströmt ist.

6. Ventil nach einem der vorangehenden Ansprüche,
**dadurch gekennzeichnet, dass**
der ausfahrbare Abschnitt (14) durch zumindest ein elastisches Element in seine nicht ausgefahrene Stellung gedrückt wird.

7. Ventil nach einem der vorangehenden Ansprüche,
**dadurch gekennzeichnet, dass**
dieses an einem Ausgang ein Druckbegrenzungsventil (22) aufweist.

## Claims

1. Valve (10) having at least one temperature element (12) with wax which expands as a function of temperature and which has a section (14) which extends upon expansion and opens a rotation-activated valve element (16) of the valve (10), wherein, even when the section (14) is extended, the temperature element (12) is displaceable in such a way that the valve (16) remains closed or is closed, wherein the temperature element is displaceable against a spring (42) of the valve (10), **characterised in that** this forced closure is achieved by the fact that a valve drive motor of the valve (10) closes the valve and in the process for example a lever which cooperates with the extendable section of the temperature element is rotated with it in such a way that the temperature element is displaced.

2. Valve according to claim 1, **characterised in that** a transmission is located between the extendable section (14) and the valve element (16).

3. Valve according to claim 2, **characterised in that** the transmission has at least one pinion (18) and/or a toothed section (20).

4. Valve according to any of the preceding claims, **characterised in that** the extendable section (14) and/or the transmission is designed to open the valve element (16) completely.

5. Valve according to any of the preceding claims, **characterised in that** the medium to be controlled flows round the temperature element (12).

6. Valve according to any of the preceding claims, **characterised in that** the extendable section (14) is forced into its non-extended position by at least one elastic element.

7. Valve according to any of the preceding claims, **characterised in that** at its output it has a pressure-limiting valve (22).

## Revendications

1. Soupape (10) avec au moins un élément de température (12) se dilatant en fonction de la température, comprenant de la cire, lequel présente une section (14), qui se déploie lors de la dilatation et qui ouvre un élément de soupape (16), actionné en rotation, de la soupape (10),
l'élément de température (12) pouvant être déplacé par coulissement, même lorsque la section (14) est déployée, de telle manière que la soupape (16) reste fermée ou se ferme, l'élément de température pouvant être déplacé par coulissement contre un ressort (42) de la soupape (10), **caractérisée en ce que** ladite fermeture forcée est obtenue par le fait qu'un moteur d'entraînement de soupape de la soupape (10) ferme la soupape, et que ce faisant un levier, par exemple, qui coopère avec la section pouvant être déployée de l'élément de température, tourne simultanément de telle manière que l'élément de température est déplacé par coulissement.

2. Soupape selon la revendication 1,
**caractérisée en ce que**
un engrenage se trouve entre la section (14) pouvant être déployée et l'élément de soupape (16).

3. Soupape selon la revendication 2,
**caractérisée en ce que**
l'engrenage présente au moins un pignon (18) et/ou une section dentée (20).

4. Soupape selon l'une quelconque des revendications précédentes,
**caractérisée en ce que**
la section (14) pouvant être déployée et/ou l'engrenage sont configurés pour ouvrir complètement l'élément de soupape (16).

5. Soupape selon l'une quelconque des revendications précédentes,
**caractérisée en ce que**
l'élément de température (12) est entouré par le flux du fluide à commander.

6. Soupape selon l'une quelconque des revendications précédentes,
**caractérisée en ce que**
la section (14) pouvant être déployée est poussée par au moins un élément élastique dans sa position non déployée.

7. Soupape selon l'une quelconque des revendications précédentes,
**caractérisée en ce que**
celle-ci présente, au niveau d'une sortie, une soupape de limitation de pression (22).
